Europäisches Patentamt

European Patent Office

Office européen des brevets

(11) Veröffentlichungsnummer: **0 234 206**

**A2**

(12) # EUROPÄISCHE PATENTANMELDUNG

(21) Anmeldenummer: **87100236.6**

(51) Int. Cl.⁴: **A61J 1/08** , C03B 33/12

(22) Anmeldetag: **10.01.87**

(30) Priorität: **25.02.86 DE 3606017**

(43) Veröffentlichungstag der Anmeldung:
**02.09.87 Patentblatt 87/36**

(84) Benannte Vertragsstaaten:
**AT BE CH FR GB IT LI LU NL SE**

(71) Anmelder: **Hans Hackner Prototypen GmbH**
**Wappersdorf Nr. 35**
**D-8431 Mühlhausen(DE)**

(72) Erfinder: **Hackner, Wilhelmine, geb.Ring**
**Wangen 21**
**D-8431 Mühlhausen(DE)**

(74) Vertreter: **Neubauer, Hans-Jürgen, Dipl.-Phys.**
**Fauststrasse 30**
**D-8070 Ingolstadt(DE)**

(54) **Handgerät zum Öffnen von Glasampullen.**

(57) Die Erfindung betrifft ein Handgerät zum Öffnen von Glasampullen, das erfindungsgemäß aus zwei mit der Hand umschließbaren Klammerarmen (2, 3) besteht, die über eine Schwenkachse (4) verbunden sind, so daß ein öffenbarer und schließbarer Klemmbereich für die Glasampullen (8) entsteht. Durch Ausnehmungen an wenigstens einem der Klammerarme (2, 3) wird eine Aussparung (14) gebildet, deren Form und Durchmesser etwa der Einschnürung (9) am oberen Ende handelsüblicher, medizinischer Glasampullen (8) entspricht. Eine Glasschneideinrichtung (5) ist an wenigstens einem der Klammerarme (2, 3) im Bereich der Aussparung (14) so angebracht, daß sie an der Glasampulle (8) zur Anlage bringbar ist. In einer bevorzugten Ausführungsform ist in der Schneideinrichtung (5) ein federbelasteter Schneidstift (17) vorgesehen. Zum Einritzen der Glasampulle werden die beiden Klammerarme (2, 3) geschlossen, wodurch die Schneideinrichtung unter Druck auf der Glasampulle (8) zu liegen kommt, und die Glasampulle (8) gedreht. Anschließend kann der Ampullenkopf (7) abgebrochen werden.

FIG. 1

## Handgerät zum Öffnen von Glasampullen

Die Erfindung betrifft ein Handgerät zum Öffnen von Glasampullen nach dem Oberbegriff des Anspruchs 1.

In Krankenhäusern und Arztpraxen werden eine Vielzahl von flüssigen Arzneimitteln verwendet, die in Glasampullen enthalten sind. Diese Glasampullen müssen vor der Verabreichung der Arnzeimittel geöffnet werden.

Die Glasampullen haben dazu an ihrem oberen Ende eine umlaufende Verengung oder Einschnürung, die als Ansatz und Führung für eine kleine Säge dient. Die "Sägen" liegen den Ampullenpackungen bei und bestehen lediglich aus einem kurzen, meist nicht entgrateten Blechstück mit einseitiger Riffelung.

Eine Glasampulle wird daher meist so geöffnet, daß eine Krankenschwester oder Arzthelferin in eine Hand die Glasampulle nimmt und sie durch Pressen an den Körper ab stützt sowie mit der anderen Hand das kurze Blechstück ergreift und an der Einschnürung der Ampulle so lange kratzt, bis sich der Ampullenkopf abbrechen läßt. Dies ist unbequem und kann zu Verletzungen führen. Weiter können beim Einritzen der Ampulle Glassplitter in den Ampulleninhalt gelangen.

Es sind bereits Handgeräte zum Öffnen von Glasampullen bekannt (DE-PS 31 32 041 und DE-OS 1 491 744, von denen bei der Gattungsbildung ausgegangen wird), die zwei mit der Hand umschließbare Klammerarme aufweisen, die über eine Schwenkachse verbunden sind, so daß ein öffenbarer und schließbarer Klemmbereich für die Glasampullen entsteht. An den Klammerarmen sind Ausnehmungen angebracht, so daß bei geschlossenem Klemmbereich eine Aussparung entsteht, deren Form etwa der Einschnürung am oberen Ende handelsüblicher medizinischer Glasampullen entspricht. An wenigstens einem Klammerarm ist im Bereich der Aussparung eine Glasschneideeinrichtung (Schneidrad oder Schneidstift) angebracht, der im Bereich der Aussparung an die Glasampulle zur Anlage bringbar ist.

Die Ampullenöffner nach dem vorstehend genannten Stand der Technik arbeiten in der Weise, daß der Ampullenhals zwischen die Klammerarme eingeklemmt wird und unmittelbar mit dem Druck der Hand auf die Schneideinrichtung gepreßt wird. Durch Drehen der Ampulle bzw. des Öffners wird die Schneideinrichtung am Ampullenhals entlanggeführt, so daß dieser geritzt und abgebrochen werden kann.

Solche Ampullenöffner haben ersichtlich den Nachteil, daß die zwischen Ampullenhals und Schneideinrichtung aufgebrachte Kraft vom Zusammenpressen der Klammerarme abhängt. Da die Schneideinrichtungen notwenigerweise spitz oder -scharf sind, wird auf die jeweilige anliegende Stelle am Glas ein hoher Druck aufgebracht, der wegen der Hebelwirkung der Klammerarme so groß sein kann, daß das relativ dünnwandige Ampullenglas ohne weiteres abgedrückt wird und die Ampulle insgesamt zerbricht. Eine solche Zerstörung einer Ampulle ist einerseits mit dem Verlust des oft teueren Ampulleninhalts verbunden und zugleich mit einer Verletzungsgefahr für die Bedienperson. Ein weiterer unangenehmer Effekt ist die Verschmutzung der Hände, der weißen Arzt-oder Pflegerkittel und evtl. von Bettüberzügen an Krankenbetten, etc.

Zusammenfassend wird festgestellt, daß bei den Ampullenöffnern nach dem vorstehend genannten Stand der Technik die für den Schneidvorgang aufgebrachte Kraft individuell und unterschiedlich von der Bedienperson je nach Körperkraft, Situationshektik, etc. aufgebracht wird, was einerseits zur Zerstörung der Ampulle oder andererseits, bei zu geringer Kraft, zu einer unbefriedigenden Schneidwirkung führt.

Ein weiter bekanntes Gerät (FR-PS 15 72 461) enthält auch nur eine Klammereinrichtung mit einer Aussparung und einer Führung für ein Schneidmesser, wobei die Schneidkraft ebenfalls direkt von Hand über die Klammerarme bzw. das Schneidmesser auf die Glasampulle aufgebracht wird. Es besteht somit auch hier die Gefahr und bekannte Tatsache, daß durch zu große Kraftaufbringung die dünnwandige Ampulle leicht zerstört wird. Somit ist dieses Gerät ähnlich zu beurteilen, wie die eingangs bereits abgehandelten.

Bei einem weiteren bekannten Gerät (US-PS 25 07 187) wird die Kraft für den Schneidvorgang ebenfalls über Klammerarme aufgebracht, die hier jedoch als Federarme ausgeführt sind. Durch eine Umlenkung wird erreicht, daß beim Zusammenpressen der Klammerarme die Aussparung für die Glasampulle geöffnet wird, beim Loslassen der Klammerarme schließt sich die Aussparung, wodurch die Ampulle einerseits gehalten und zugleich die Schneideinrichtung auf die Ampulle gepreßt wird. Auch hier ist somit die Haltekraft für die Ampulle und die Schneidkraft nicht entkoppelt, sondern gleich. Da die Ampulle im Ampullenöffner zweckmäßigerweise gehalten werden soll, ist somit von vornherein die Schneidkraft relativ groß, so daß auch hier die Gefahr der Zerstörung der Ampulle besteht. Die Anpreßkraft wird durch Zusammendrücken der Klammerarme hier verkleinert, was einer gewohnten Bedienfunktion an anderen Geräten und üblichen ergonomischen Grundsätzen gerade entgegensteht. Im übrigen ist nicht anzunehmen, daß die dargestellte Ausführungsform mit einem Federdraht auch nur annähernd befriedigend funktioniert, da bei einem nur geringen Verkanten der Glasampulle die beiden freien Halteschenkel ebenfalls verkantet werden und nicht mehr in einer Ebene einander gegenüberliegen.

Aufgabe der Erfindung es es demgegenüber, ein Handgerät zum Öffnen von Glasampullen so weiterzubilden, daß die Gefahr der Zerstörung von Glasampullen beim Öffenvorgang sehr gering ist und andererseits eine ausreichende Schneidwirkung erzielt wird.

Diese Aufgabe wird mit den kennzeichnenden Merkmalen des Anspruchs 1 gelöst.

Gemäß Anspruch 1 weist das erfindungsgemäße Handgerät zum Öffnen von Glasampullen ebenfalls zwei mit der Hand umschließbare Klammerarme auf, die an einer Aussparung den Hals einer Glasampulle umgreifen und dort eine Glasschneideeinrichtung enthalten. Erfindungsgemäß ist die Aussparung so ausgebildet, daß deren Durchmesser bei auf Anschlag geschlossenen Klammerarmen etwas größer als die Einschnürung handelsüblicher Glasampullen ist. Dadurch wird erreicht, daß die Glasampullen zwar gehalten werden aber über die Klammerarme nicht unmittelbar ein Druck auf das Glas ausgeübt wird.. Somit können die Glasampullen nicht durch zu starke Kraftaufwendung zerdrückt werden. Insbesondere wird keine hohe Kraft von Hand punktuell über die scharfe und spitze Schneideinrichtung auf das Glas aufgebracht.

Die Schneideinrichtung ist erfindungsgemäß beweglich gelagert und wird mit einer Feder in den Bereich der Aussparung auf die Einschnürung einer Glasampulle gedrängt. Die für den Schneidvorgang erforderliche Anpreßkraft ist somit gleichbleibend durch die verwendete Feder bestimmt und so groß einstellbar, daß eine befriedigende Schneidwirkung erzielt wird, eine Zerstörung der Ampulle dagegen sicher vermieden wird.

Zusammenfassend ist festzustellen, daß die von den mit der Hand umschlossenen Klammerarmen ausgehende Kraft und die für den Schneidvorgang erforderliche Kraft praktisch entkoppelt sind, da die Klammerarme beim Schneidvorgang bis zu ihrem Anschlag zusammenbewegt werden.

Eine vorteilhafte, weitere Ausführung wird mit den Merkmalen des Anspruchs 2 dadurch erreicht, daß eine Feder die beiden Klammerarme in ihre Offenstellung gegen einen Anschlag drängt. Die Offenstellung muß so groß sein, daß ein Ampullenkopf bequem in die Aussparung eingebracht werden kann. Die federnde Offenstellung ist vorteilhaft für eine Einhand-Bedienung, wobei in einer Hand das Handgerät gehalten wird und in der anderen Hand die Glasampulle. Zweckmäßig wird das Handgerät an einer Kette oder Schnur umgebunden getragen, so daß es jederzeit sofort zur Verfügung steht.

Nach Anspruch 3 kann die Aussparung, durch die der Glasampullenkopf bei geöffneten Klammerarmen eingeführt wird und mit der die Einschnürung umgriffen wird in Längsrichtung der Klammerarme oder quer dazu liegen. Beide Ausführungsformen funktionieren gleichwertig und es ist nur eine Frage der Gewöhnung der Bedienperson, welche Ausführung bevorzugt wird.

Die Schneideinrichtung kann gemäß Anspruch 4 in an sich bekannter Weise als drehbares Schneidrad, Schneidmesser oder als Schneidstift mit Spitze ausgeführt sein.

Um viele Glasampullen mit einer Schneideinrichtung öffnen zu können, wird mit Anspruch 5 vorgeschlagen, die Schneidfläche oder Schneidspitze als Diamant, Hartmetall oder Saphir auszuführen oder eine entsprechende Beschichtung vorzunehmen.

Wenn die Schneideinrichtung stumpf und verbraucht ist, wird mit den Merkmalen des Anspruchs 6 erreicht, daß sie einfach und schnell ausgewechselt werden kann, ohne daß das gesamte Handgerät ersetzt werden muß.

Anhand einer Zeichnung wird ein Ausführungsbeispiel der Erfindung mit weiteren Merkmalen, Einzelheiten und Vorteilen näher erläutert.

Es zeigen

Fig. 1 eine Seitenansicht eines Handgeräts zum Öffnen von Glasampullen,

Fig. 2 eine Vorderansicht des Handgeräts nach Fig. 1.

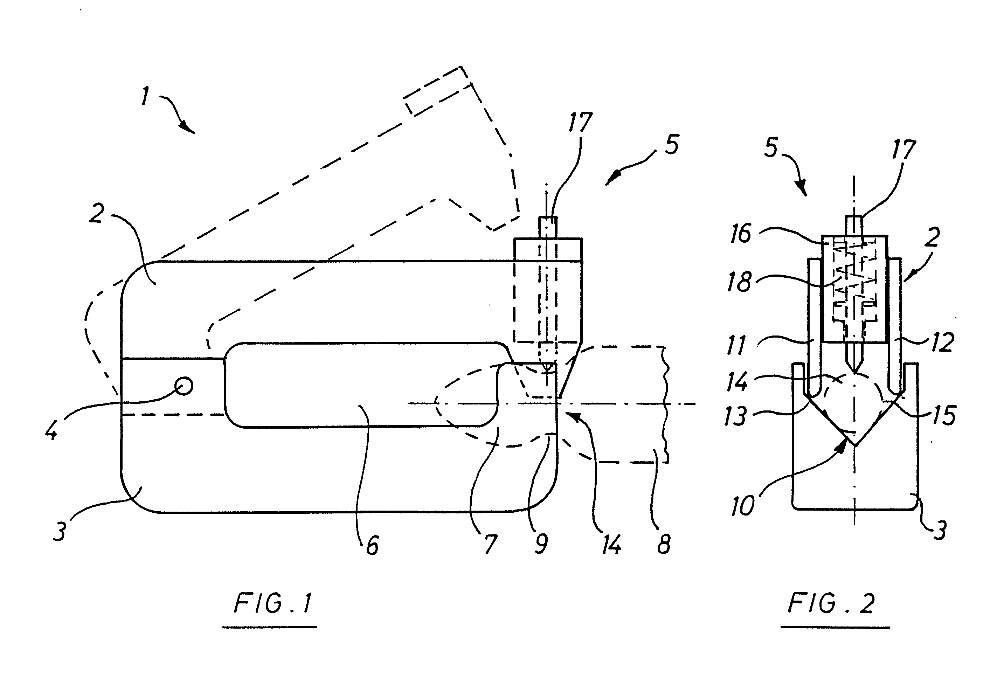

In Fig. 1 ist ein Handgerät 1 zum Öffnen von Glasampullen etwas vergrößert gegenüber seiner Originalgröße dargestellt. Es besteht im wesentlichen aus zwei Klammerarmen 2, 3, die über eine Schwenkachse 4 verbunden sind, und aus einer Schneid-bzw. Ritzeinrichtung 5.

Beide Klammerarme 2, 3 sind U-förmig ausgeführt, so daß dazwischen ein Freiraum 6 auch im geschlossenen Zustand verbleibt. In dem Freiraum 6 findet der Kopf 7 einer Glasampulle 8 Platz. Der Kopf 7 ist über eine Einschnürung 9 mit dem übrigen Ampullenkörper verbunden.

Nach Fig. 2 weist der untere Klammerarm 3 an seiner vorderen Breitseite eine V-förmige Vertiefung 10 auf, in die die beiden Seitenwände 11, 12 des oberen Klammerarms 2 eingreifen und im geschlossenen Zustand der beiden Klammerarme 2, 3 als Anschlag 13 anliegen. Durch die Vertiefung 10 und die beiden Seitenwände 11, 12 wird eine Aussparung 14 gebildet, die etwas größer als der Durchmesser der Einschnürung 9 (strichliert als Kreis 15 angedeutet) ist.

Zwischen den Seitenwänden 11, 12 am vorderen Ende des Klammerarms 2 ist die Schneideinrichtung 5 gehalten, die aus einer Buchse 16 besteht, innerhalb der ein Schneidstift 17 beweglich in Richtung auf die Einschnürung 9 gehalten und geführt ist. Der Schneidstift 17 wird mit Hilfe einer - (schematisch angedeuteten) Spiralfeder 18 in die Aussparung 14 bzw. auf die Einschnürung 9 gedrängt und gepreßt. Der Schneidstift 17 hat eine Diamantspitze.

Die Klammerarme 2, 3 enthalten im Bereich ihrer Schwenkachse 4 eine (nicht dargestellte) Feder, die beide Arme 2, 3 im unbelasteten Zustand in der am Klammerarm 2 strichliert angedeuteten Offenstellung hält.

Das dargestellte Handgerät 1 hat folgende Funktion:

Zum Öffnen einer Glasampulle 8 wird das Handgerät 1 mit einer Hand ergriffen, wobei es in der strichliert gezeichneten Offenstellung steht. Mit der anderen Hand wird die Glasampulle 8 so in das Handgerät 1 eingelegt, daß die Einschnürung 9 in den Bereich der Aussparung 14 gehalten wird. Anschließend werden die Klammerarme 2, 3 bis zum Anschlag 13 zusammengepreßt, wozu nur wenig Kraft erforderlich ist. Dadurch wird die Glasampulle 8 mit ihrer Einschnürung 9 im Bereich der Aussparung 14 justiert und auch gehalten. Durch die Schließbewegung wird zugleich der im unbelasteten Zustand von der Feder 18 weiter in die Aussparung 14 ragende Schneidstift 17 zurückgedrängt, bzw. sitzt der Schneidstift 17 dadurch fest und mit dem Druck der Feder 18 auf der Glasampulle 8 im Bereich der Einschnürung 9 auf. Jetzt wird die Glasampulle 8 gedreht, wodurch der Schneidstift 17 die Glasampulle 8 an der Einschnürung so einritzt, daß der Kopf 7 nach der Entnahme der Glasampulle 8 leicht abgebrochen werden kann.

Das dargestellte Ausführungsbeispiel soll im wesentlichen schematisch die Bauelemente und die Funktion darstellen.

Es versteht sich, daß in einer Marktausführung das Handgerät nach ergonomischen Gesichtspunkten mit Griffmulden etc. geformt sein sollte.

Zusammenfassend wird festgestellt, daß mit dem erfindungsgemäßen Handgerät zum Öffnen von Glasampullen eine Einrichtung zur Verfügung gestellt wird, mit der schnell, bequem und ohne Verletzungsgefahr Glasampullen geöffnet werden können.

**Ansprüche**

1. Handgerät zum Öffnen von Glasampullen, mit zwei mit der Hand umschließbaren Klammerarmen, die über eine Schwenkachse oder Schiebeführung verbunden sind, so daß ein öffenbarer und schließbarer Klemmbereich für die Glasampullen entsteht, mit Ausnehmungen an wenigstens einem der Klammerarme, so daß bei geschlossenem Klemmbereich eine Aussparung entsteht, deren Form etwa der Einschnürung am oberen Ende handelsüblicher medizinischer Glasampullen entspricht, mit einer Glasschneideeinrichtung an wenigstens einem Klammerarm im Bereich der Aussparung, die an der Glasampulle zur Anlage bringbar ist, dadurch gekennzeichnet, daß bei auf Anschlag (13) geschlossenen Klammerarmen (2, 3) die Aussparung (14) entsteht in der Form und im Durchmesser etwas größer als die Einschnürung (9) handelsüblicher Glasampullen - (8), daß die Schneideinrichtung (5) quer zu den Klammerarmen (2, 3) bzw. in den Bereich der Aussparung (14) bewegbar ist, daß die Schneideinrichtung (5) mit einer Feder - (18) in den Bereich der Aussparung (14) gedrängt wird.

2. Handgerät nach Anspruch 1, dadurch gekennzeichnet, daß die Klammerarme (2, 3) mit einer Feder versehen sind, so daß sie auseinandergedrängt bzw. der Klemmbereich offen gehalten ist.

3. Handgerät nach einem der Ansprüche 1 bis 2, dadurch gekennzeichnet, daß die Aussparung - (14) in Längsrichtung der Klammerarme (2, 3) oder quer dazu liegt.

4. Handgerät nach einem der Ansprüche 1 bis 3, dadurch gekennzeichnet, daß die Schneideinrichtung ein Schneidrad, Schneidmesser oder Schneidstift (17) mit Spitze ist.

5. Handgerät nach Anspruch 4, dadurch gekennzeichnet, daß die Schneidfläche oder Schneidspitze als Diamant, Hartmetall oder Saphir ausgeführt oder damit besetzt oder beschichtet ist.

6. Handgerät nach Anspruch 4 oder 5, dadurch gekennzeichnet, daß die Schneideinrichtung (17) leicht auswechselbar eingeschraubt oder eingeklemmt ist.

_FIG. 1_

_FIG. 2_

0 234 206